(19) **Europäisches Patentamt / European Patent Office / Office européen des brevets**

(11) **EP 4 651 363 A1**

(12) **EUROPEAN PATENT APPLICATION**
published in accordance with Art. 153(4) EPC

(43) Date of publication:
19.11.2025 Bulletin 2025/47

(21) Application number: 23915916.3

(22) Date of filing: 11.01.2023

(51) International Patent Classification (IPC):
H02P 21/22 (2016.01)    H02P 27/06 (2006.01)

(52) Cooperative Patent Classification (CPC):
H02P 21/22; H02P 27/06

(86) International application number:
PCT/JP2023/000370

(87) International publication number:
WO 2024/150292 (18.07.2024 Gazette 2024/29)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: TMEIC Corporation
Tokyo 104-0031 (JP)

(72) Inventor: IKEDA, Shuzo
Tokyo 104-0031 (JP)

(74) Representative: TBK
Bavariaring 4-6
80336 München (DE)

(54) **MOTOR DRIVING SYSTEM AND CONTROL METHOD FOR INVERTER DEVICE**

(57)  A motor drive system according to an embodiment includes a converter device and an inverter device. The converter device converts a first AC voltage into a DC voltage. The inverter device converts the DC voltage into a second AC voltage and outputs the second AC voltage to a motor. The converter device causes the DC voltage to follow a DC voltage command value. The inverter device causes a speed of the motor to follow a speed command value. The inverter device corrects the speed command value based on the DC voltage command value and the DC voltage. The inverter device controls the motor by applying the corrected speed command value.

FIG. 1

**Description**

[Technical Field]

Embodiments of the invention relate to a motor drive system and a method for controlling an inverter device of an elevator motor that can withstand a brief voltage drop.

[Background Art]

Herein, elevators refer to machines that transport persons and/or objects in the direction of gravity, and include so-called elevators, mine shaft hoists, incline hoists, cranes, etc.

A known technique of a conventional inverter drive device to suppress a drop in speed due to the occurrence of an instantaneous power supply voltage drop includes controlling the field current of a vector control according to the operating state. Patent Literature 1 describes a technique of increasing the robustness of industrial variable speed drive equipment such as central air conditioners, paper reels, etc., without including an uninterruptible power supply or a redundant power supply, by controlling the field current to suppress a drop in speed better than conventional techniques.

[Prior Art Documents]

[Patent Literature]

[Patent Literature 1]
Chinese Unexamined Patent Application No. 111769773 Specification

[Summary of Invention]

[Problem to be Solved by the Invention]

Applications of inverter drive devices such as those described above to elevators have the following problems. Specifically, the elevator lifts and lowers an object by torque generated by the motor. Therefore, when the torque generated by the motor decreases due to an instantaneous power supply voltage drop, the object that is being lifted or lowered by the elevator accelerates or decelerates due to the effects of gravity. It is difficult to apply the elevator in such equipment because Patent Literature 1 does not explicitly teach the extent of the effects of the instantaneous power supply voltage drop that should act as a trigger to discontinue the driving and activate safety measures by operating an external part such as an emergency brake.

The invention is directed to solve problems such as those described above, and to obtain a motor drive system and a method for controlling a motor that can extend the time that the inverter driving of the motor can be continued even when an instantaneous power supply voltage drop occurs.

[Means for Solving the Problem]

A motor drive system according to an embodiment of the invention includes a first power conversion device and a second power conversion device; the first power conversion device converts a first AC voltage supplied from an AC power supply into a DC voltage, and outputs the first AC voltage; and the second power conversion device converts the DC voltage into a second AC voltage and outputs the second AC voltage to a motor. The first power conversion device includes a DC voltage control part controlling the DC voltage to follow a DC voltage command value; and the DC voltage command value is preset. The second power conversion device includes a first speed control part and a second speed control part; the first speed control part controls a speed of the motor to follow a speed command value; the speed command value is preset; and the second speed control part calculates a correction value of the speed command value based on the DC voltage command value and the DC voltage. The second speed control part calculates the correction value based on a difference between the DC voltage command value and the DC voltage.

[Effects of the Invention]

According to embodiments, a motor drive system and a method for controlling a motor that can extend the time that inverter driving of a motor can be continued even when an instantaneous power supply voltage drop occurs are realized.

[Brief Description of Drawings]

[FIG. 1]

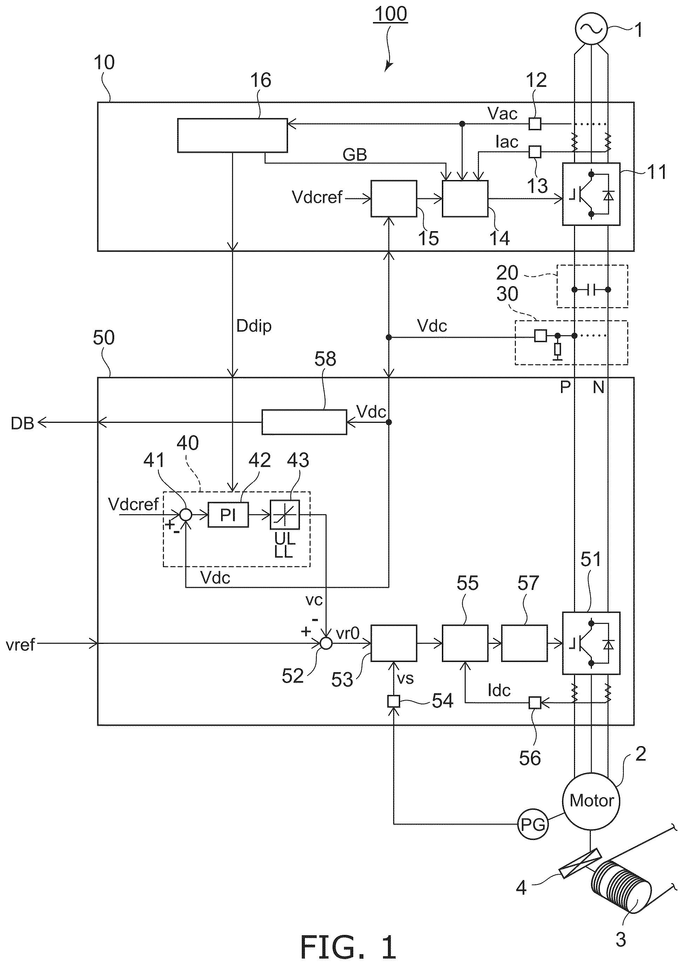

FIG. 1 is a schematic block diagram illustrating a motor drive system according to a first embodiment.
[FIG. 2]

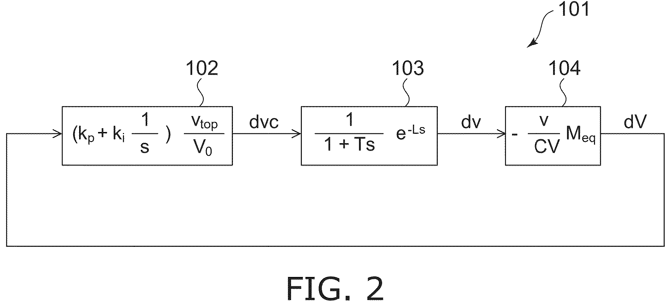

FIG. 2 is a schematic block diagram illustrating a control system of an inverter device of FIG. 1.
[FIG. 3]

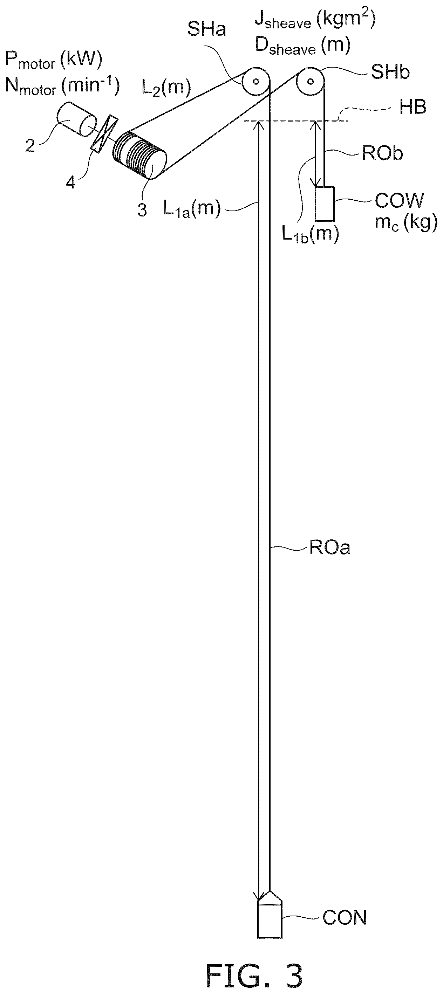

FIG. 3 is a schematic view for describing an operation of the motor drive system according to the first embodiment.
[FIG. 4]

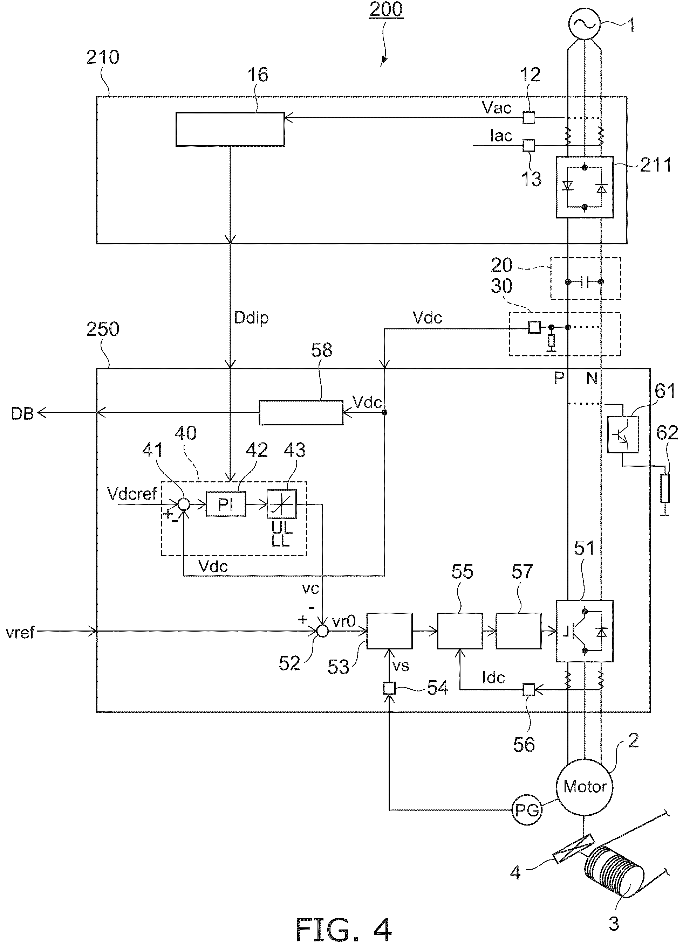

FIG. 4 is a schematic block diagram illustrating a motor drive system according to a second embodiment.

[Detailed Description]

Various embodiments are described below with reference to the accompanying drawings.

The drawings are schematic or conceptual; and the relationships between the thickness and width of portions, the proportions of sizes among portions, etc., are not necessarily the same as the actual values. Also, the dimensions and proportions may be illustrated differently among drawings, even when the same portion is illustrated.

In the specification and drawings, components similar to those described previously or illustrated in an antecedent drawing are marked with the same reference numerals; and a detailed description is omitted as appropriate.

(First embodiment)

FIG. 1 is a schematic block diagram illustrating a motor drive system according to a first embodiment.

As shown in FIG. 1, the motor drive system 100 is located between an AC power supply 1 and a motor 2. The AC power supply 1 is, for example, a power supply supplying three-phase alternating current. The motor 2 is an AC motor, e.g., an induction motor. The motor 2 is mechanically coupled with a drum 3 via a gear 4. Although not illustrated in FIG. 1, a rope is wound onto the drum 3; and a cage into which mined materials, workers, etc., are loaded is located at the distal end of the rope. For example, the motor drive system 100 controls the speed of the motor 2 in two directions, forward and reverse, according to a speed command value output from a main control device, which is not illustrated. The speed-controlled motor 2 lifts and lowers the cage vertically inside a shaft by winding the rope onto the drum 3 and by unwinding from the rope.

The motor drive system 100 includes a converter device (a first power conversion device) 10 and an inverter device (a second power conversion device) 50. The AC power supply 1 is connected to the input of the converter device 10 and supplies an AC voltage (a first AC voltage) to the converter device 10. The output of the converter device 10 is connected to the input of the inverter device 50. The motor 2 is connected to the output of the inverter device 50; and the inverter device supplies an AC voltage (a second AC voltage) to the motor 2. A capacitor 20 is connected in parallel between the output of the converter device 10 and the input of the inverter device 50. The capacitor 20 smoothes the voltage output by the converter device 10 and supplies a DC voltage to the inverter device 50. The capacitor 20 has an electrostatic capacitance sufficient to stably supply the DC voltage to the inverter device 50 by compensating a change of the drive torque or the like of the motor 2 that is faster than the response speed of the converter device 10.

The motor drive system 100 includes the DC voltage detecting part 30; and a DC voltage Vdc of the capacitor 20 is monitored by the DC voltage detecting part 30. When the DC voltage Vdc of the capacitor 20 fluctuates due to a drop of the AC voltage of the AC power supply 1 or a power interruption, the motor drive system 100 suppresses fluctuation of the DC voltage Vdc by correcting a speed command value vref output from the main control device. By suppressing the fluctuation of the DC voltage Vdc of the capacitor 20, the motor drive system 100 avoids a stop of the operation of the motor 2, and prevents a reduction of the operation efficiency of the elevator.

A configuration of the motor drive system 100 will now be described in detail.

First, a configuration of the converter device 10 will be described.

As shown in FIG. 1, the converter device 10 includes a power conversion part 11, a voltage detector 12, a current detector 13, a PWM controller 14, a voltage controller 15, and an AC voltage detecting part 16. The power conversion part 11, the voltage detector 12, the current detector 13, the PWM controller 14, and the voltage controller 15 (a DC voltage control part) control the DC voltage Vdc detected by the DC voltage detecting part 30 to follow a DC voltage command value Vdcref. The converter device 10 is configured to perform power conversion in two directions. In other words, the converter device 10 converts the AC voltage (the first AC voltage) output from the AC power supply 1 into a DC voltage, and outputs the DC voltage to the inverter device 50. The power conversion part 11 converts a DC voltage generated by the inverter device 50 due to a regenerative operation of the motor 2 into an AC voltage (a third AC voltage), and outputs the AC voltage to the AC power supply 1.

The input of the power conversion part 11 is connected to the AC power supply 1. The output of the power conversion part 11 is connected to the input of the inverter device 50 via the capacitor 20. The power conversion part 11 includes a power conversion circuit converting an AC voltage into a DC voltage; and the power conversion circuit includes a three-phase bridge circuit, etc. Techniques more appropriate for the input and output voltages, input and output currents, etc., are selected for the specific circuit configurations, circuit elements, etc., of the power conversion circuit.

The voltage detector 12 is provided to detect the voltages of the phases of the AC power supply 1. The voltage detector 12 detects the voltages of the phases of the AC power supply 1, and outputs the detected voltage values to the PWM controller 14 and the AC voltage detecting part 16.

The current detector 13 is provided to detect the line currents of the phases of the AC power supply 1. The current detector 13 detects the line currents of the phases of the AC power supply 1, and outputs the detected current values to the PWM controller 14.

The output of the voltage detector 12, the output of the current detector 13, and the output of the AC voltage detecting part 16 are connected to the PWM controller 14. The output of the PWM controller 14 is connected to the power conversion part 11. The PWM controller 14 generates a gate signal based on the voltage value and current value of the AC power supply 1 and based on the output of the voltage controller 15, and outputs the gate signal to the power conversion part 11. The output of the AC voltage detecting part 16 is connected to the PWM controller 14; and the PWM controller 14 stops the output of the gate signal when the AC voltage detecting part 16 outputs a gate block command GB.

The DC voltage command value Vdcref is input to the voltage controller 15. The DC voltage command value Vdcref is preset. For example, the DC voltage command value Vdcref is supplied from the main control device. The DC voltage Vdc of the capacitor 20 from the DC voltage detecting part 30 is input to the voltage controller 15. The voltage controller 15 generates a current command value so that the DC voltage Vdc follows the DC voltage command value Vdcref, and outputs the current command value to the PWM controller 14.

The output of the voltage detector 12 is connected to the AC voltage detecting part 16. The AC voltage detecting part 16 includes a low-voltage threshold. The low-voltage threshold is preset. For example, the AC voltage detecting part 16 performs peak holding of the voltage value detected by the voltage detector 12, and when the value of the voltage value is less than the low-voltage threshold, generates a low-voltage detection signal Ddip and outputs the low-voltage detection signal Ddip to a low-voltage speed controller 40 of the inverter device 50.

A configuration of the inverter device 50 will now be described.

The inverter device 50 includes the low-voltage speed controller 40, a power conversion part 51, an arithmetic unit 52, a speed controller 53, a speed detector 54, a current controller 55, a current detector 56, a PWM controller 57, and an emergency stop part 58. The power conversion part 51, the speed controller 53, the speed detector 54, the current controller 55, the current detector 56, and the PWM controller 57 (a first speed control part) control the speed of the motor 2 to follow the speed command value vref. The low-voltage speed controller 40 and the arithmetic unit 52 (a second speed control part) calculate a correction value vc of the speed command value vref based on the difference of the DC voltage command value Vdcref and the DC voltage Vdc.

The low-voltage speed controller 40 is connected to the output of the AC voltage detecting part 16 of the converter device 10. The low-voltage speed controller 40 is connected to the output of the DC voltage detecting part 30. For example, the DC voltage command value Vdcref that is output from the main control device is input to the low-voltage speed controller 40. The low-voltage speed controller 40 stops the operation and waits until the low-voltage detection signal Ddip is input from the AC voltage detecting part 16. The low-voltage speed controller 40 starts the operation when the low-voltage detection signal Ddip is input. When starting the operation, the low-voltage speed controller 40 generates the correction value vc of the speed command value vref based on the DC voltage command value Vdcref and the DC voltage Vdc, and outputs the correction value vc to the arithmetic unit 52.

More specifically, the low-voltage speed controller 40 includes an arithmetic unit 41 and a controller 42. The DC voltage command value Vdcref and the DC voltage Vdc are input to the arithmetic unit 41. The arithmetic unit 41 calculates the difference between the DC voltage command value Vdcref and the DC voltage Vdc and outputs the calculated difference. The controller 42 is, for example, a PI controller, and calculates and outputs the difference between the DC voltage command value Vdcref and the DC voltage Vdc by performing a proportionalintegral operation. That is, the controller 42 calculates and outputs the correction value vc of the speed command value vref so that the DC voltage Vdc follows the DC voltage command value Vdcref. The low-voltage speed controller 40 may include a limiter 43 as in the example of FIG. 1. The limiter 43 limits the output of the controller 42 in a range from a maximum value UL to a minimum value LL of the correction value vc of the speed command value.

For example, when the motor 2 is operating under power, and when the DC voltage Vdc across the capacitor 20 drops due to a decrease of the AC power supply 1, the low-voltage speed controller 40 outputs the correction value vc to reduce the speed command value vref. The inverter device 50 controls the motor 2 to follow a speed command value vr0 reduced by the correction value vc.

For example, when the motor 2 is performing a regenerative operation, and when the DC voltage Vdc across the capacitor 20 rises due to a drop of the AC voltage of the AC power supply 1, the low-voltage speed controller 40 outputs the correction value vc to increase the speed command value vref. The inverter device 50 controls the motor 2 to follow the speed command value vr0 increased by the correction value vc.

The input of the power conversion part 51 is connected to the output of the converter device 10 via the capacitor 20. The output of the power conversion part 51 is connected to the motor 2. Based on the gate signal generated by the PWM controller 57, the power conversion part 51 controls the motor 2 to follow the speed command value vref output from the main control device or the speed command value vr0 corrected by the low-voltage speed controller 40.

The speed command value vref or the corrected speed command value vr0 is input to the speed controller 53. The output of the speed detector 54 is connected to the speed controller 53. The speed detector 54 is provided to detect the rotational speed of the motor 2, and outputs the detected speed vs of the motor to the speed controller 53. The speed controller 53 generates an output current command value based on the speed command value vref and the speed vs of the motor. When the low-voltage speed controller 40 outputs the correction value vc of the speed command value vref, the speed controller 53 generates the output current command value based on the corrected speed command value vr0 and the speed vs of the motor 2. The generated current command value is output to the current controller 55.

The output of the current detector 56 is connected to the current controller 55. The current detector 56 is provided to detect an output current Idc of the phases of the power conversion part 51. The current detector 56 detects the output current Idc of the power conversion part 51 and outputs the detected output current Idc to the current controller 55. The current controller 55 calculates a modulation voltage based on the output current command value input from the speed controller 53 and the output current Idc detected by the current detector 56, and outputs the modulation voltage to the PWM controller 57.

The PWM controller 57 generates a gate signal based on a reference triangular wave, which is not illustrated, and the modulation voltage generated by the current controller 55, and outputs the gate signal to the power conversion part 51.

The emergency stop part 58 is connected to the output of the DC voltage detecting part 30. The emergency stop part 58 inputs the DC voltage Vdc across the capacitor 20 detected by the DC voltage detecting part 30. The emergency stop part 58 includes an emergency stop threshold. The emergency stop threshold is preset. The emergency stop part 58 monitors the DC voltage Vdc, and when the DC voltage Vdc drops below the emergency stop threshold, generates an emergency brake activation command DB, and outputs the emergency brake activation command DB to the main control device. Based on the emergency brake activation command DB, the main control device activates an emergency brake, which is not illustrated, and stops the motor 2.

Even when the operation of the elevator is continued by the operation of the low-voltage speed controller 40, the emergency stop part 58 forcibly stops the operation of the elevator when the DC voltage Vdc across the capacitor 20 is not less than a threshold or not more than a threshold. As a result, unforeseen accidents such as falling loads, etc., are prevented.

A method for calculating parameters for controlling the low-voltage speed controller 40 will now be described.

The case is considered for the low-voltage speed controller 40 when the AC power supply 1 decreases in a state in which a load or the like is loaded in a cage located at the distal end of a rope wound onto the drum 3 or unwound from the drum 3. Mechanical friction, windage loss, the heat loss inside the electrical circuit, etc., are ignored. The sum total of the kinetic energy, potential energy, and electrical energy stored in the capacitor are kept constant; and the relationship of Formula (1) holds.

[Formula 1]

$$\frac{1}{2}M_{eq}v^2 + \left(M_{qa} - M_{qb}\right)gh + \frac{1}{2}CV^2 = const. \quad \cdots (1)$$

The constants and variables of Formula (1) are defined as follows. The specific configuration of the elevator beyond the drum 3 is shown in FIG. 3. FIG. 3 is a specific example of a double-drum elevator.

$M_{eq}$: Equivalent mass (kg) converted into lifting/lowering direction of cage CON
$M_{qa}$: Mass (kg) of cage CON and rope ROa under pulley SHa supporting cage CON
$M_{qb}$: Mass (kg) of counter weight COW and rope ROb under pulley SHb supporting counter weight COW
$v$: Speed (m/s) of cage CON
$g$: Acceleration due to gravity (m/s$^2$)
$h$: Height (m) from lower limit of range of operation of cage CON
$C$: Electrostatic capacitance (F) of capacitor 20
$V$: DC voltage (V)

Formula (2) is obtained by differentiating Formula (1) by time t.

[Formula 2]

$$\frac{1}{2} M_{eq}\, 2v\, \frac{dv}{dt} + \left(\mathrm{M_{qa}} - \mathrm{M_{qb}}\right) g\, \frac{dh}{dt} + \frac{1}{2} C\, 2V\, \frac{dV}{dt} = 0 \quad \cdots (2)$$

Formula (2) is rearranged to obtain Formula (3).
[Formula 3]

$$\frac{dV}{dt} = \frac{1}{CV}\left\{ -M_{eq}\, v\, \frac{dv}{dt} - \left(M_{qa} - M_{qb}\right) g\, \frac{dh}{dt} \right\} \quad \cdots (3)$$

Integrating the speed v over time gives the height h, and so $dh/dt = v$. Accordingly, Formula (4) is obtained.
[Formula 4]

$$\frac{dV}{dt} = \frac{v}{CV}\left\{ -M_{eq}\, \frac{dv}{dt} - \left(M_{qa} - M_{qb}\right) g \right\} \quad \cdots (4)$$

When the controller 42 is taken to be a PI controller as shown in FIG. 1, the correction value vc of the speed command value vref can be represented as in Formula (5). $s$ is the Laplacian.
[Formula 5]

$$vc = -\left(k_p + k_i\, \frac{1}{s}\right) \frac{V_0 - V}{V_0}\, v_{top} \quad \cdots (5)$$

The definitions of the constants and variables of Formula (5) are as follows.

$vc$: Correction value (m/s) of speed command value of inverter device 50
$v_{top}$: Maximum speed (m/s) of inverter device 50
$k_p$: Proportional gain of controller 42
$k_i$: Integral gain of controller 42
$V_0$: Rated DC voltage (V) across capacitor 20

Formula (5) is differentiated by time t to obtain Formula (6).
[Formula 6]

$$\frac{dvc}{dt} = \left(k_p + k_i\, \frac{1}{s}\right) \frac{v_{top}}{V_0}\, \frac{dV}{dt} \quad \cdots (6)$$

FIG. 2 is a schematic block diagram illustrating the control system of the inverter device of FIG. 1.

As shown in FIG. 2, the relationship of the kinetic energy and potential energy of the cage CON and the electrical energy due to the charge of the capacitor 20 can be represented as a loop transfer function 101.

A first transfer function 102 of FIG. 2 is based on Formula (6); and a change value dvc of the correction value vc of the speed command value is determined by the PI control of the controller 42. A second transfer function 103 of FIG. 2 is the transfer function when the response delay of the inverter device 50 including the delay time of the speed detector 54 is taken as $L$ (s). The response of the inverter device 50 is taken as $\omega c$ (rad/s), and with $T = 1/\omega c$, the response delay including the delay time of the speed detection is taken as $L$ (s). A third transfer function 104 of FIG. 2 is a transfer function related to the kinetic energy and potential energy of the mechanical system including the cage CON, etc.; and the DC voltage fluctuation dV of the capacitor 20 is calculated using the energy of the mechanical system. Accordingly, according to the loop transfer function 101, the fluctuation part dvc of the correction value vc of the speed command value vref is determined by feeding back the DC voltage fluctuation dV of the capacitor 20.

For example, when the system described above performs fixed-period control by a programmable controller (PLC), the change amount of the DC voltage across the capacitor 20 can be calculated by integrating dvc over the time t that is an integer multiple of the control period.

The loop transfer function 101 of FIG. 2 is based on classical control theory of PI control of a first-order lag system with a dead-time element. Therefore, the parameters can be determined by setting the gain margin and phase margin of the system and by using, for example, the Chien Hrones and Reswick tuning method, etc.

Whether the control method of the controller is a P control, an I control, a PID control, or a multi-degree-of-freedom control system, techniques developed for the problem of a first-order lag system with a dead-time element are well known; the controller is not limited to PI control, and is applicable to these control methods. Whether the control method of the controller is a fuzzy control or a nonlinear control, it is well known that the target side of the control is similarly modified into "a first-order lag system with a dead-time element"; and the controller is easily applicable to such control methods.

FIG. 3 is a schematic view for describing an operation of the inverter device according to the first embodiment.

An example of a double-drum elevator is schematically shown in FIG. 3; and the constants of the parts for calculating the equivalent mass $M_{eq}$ converted into the lifting/lowering direction of the cage CON is shown in Formula (1). The equivalent mass $M_{eq}$ calculated using the following Formula (8) can be used in Formula (1), or Formula (1) may be replaced with a formula related to an equivalent moment of inertia J of the shaft of the motor 2.

[Formula 7]

**Calculation for the inertia J(kgm) at the motor shaft**

$$J = J_{motor} + \frac{1}{n^2} \left[ J_{gear} + J_{drum} + J_{drum\,rope} + r_{drum}^2 \left\{ M_{rope}(2L_2 + L_{1a} + L_{1b}) + m_L + m_c + \frac{2J_{sheave}}{r_{sheave}^2} \right\} \right] \quad \cdots (7)$$

[Formula 8]

**Calculation for the equivalent mass $M_{eq}$(kg) at the conveyor**

$$M_{eq} = m_L + M_{rope}(2L_2 + L_{1a} + L_{1b}) + \frac{2J_{sheave}}{r_{sheave}^2} + \frac{1}{r_{drum}^2}(J_{gear} + J_{drum} + J_{drum\,rope} + n^2 J_{motor}) + m_c \quad \cdots (8)$$

The definitions of the constants of FIG. 3, Formula (7), and Formula (8) are as follows.

$J_{motor}$: Moment of inertia (kgm$^2$) of shaft of motor 2 alone
$J_{gear}$: Moment of inertia (kgm$^2$) of output shaft of gear 4
$n$: Reduction ratio of gear 4
$J_{drum}$: Moment of inertia (kgm$^2$) of drum 3
$J_{drumrope}$: Moment of inertia (kgm$^2$) of rope wound onto drum
$r_{drum}$: Radius (m) of drum 3 (drum diameter D/2)
$M_{rope}$: Mass (kg/m) per unit length of rope
$L_2$: Rope length (m) from drum 3 to pulleys SHa and SHb
$L_{1a}$: Length (m) of rope ROa from pulley SHa to cage CON
$L_{1b}$: Length (m) of rope ROb from pulley SHb to cage CON
$m_L$: Total (kg) of mass of cage CON and mass of load
$J_{sheave}$: Moment of inertia (kgm$^2$) of pulleys SHa and SHb
$r_{sheave}$: Radius (m) of pulleys SHa and SHb (pulley diameter $D_{sheave}/2$ )

In FIG. 3, $HB$ is the maximum elevated height of the cage CON and the counter weight COW. Also, in FIG. 3, $P_{motor}$(kW) is the rated output power of the motor 2; and $N_{motor}$(min$^{-1}$) is the speed of the motor 2. Also, in FIG. 3, $m_c$(kg) is the mass of the counter weight.

In the mechanical system of the elevator, other than the double drum shown in FIG. 3, various lifting/lowering techniques such as single-drum, Koepe, etc., are applicable. For such various lifting/lowering techniques, similarly to the example above, the design parameters can be calculated by setting the constants of the parts according to the configuration of the mechanical system.

Effects of the motor drive system 100 according to the embodiment will now be described.

The motor drive system 100 according to the embodiment includes the inverter device 50 that includes the low-voltage speed controller 40. The low-voltage speed controller 40 monitors the DC voltage Vdc at the input side of the inverter device 50, and corrects the speed command value vref of the motor 2 supplied from the main control device according to the drop or rise of the DC voltage Vdc.

The correction value vc of the speed command value vref is calculated as an appropriate value by a control system of a first-order lag system with a dead-time element. More specifically, when the voltage of the AC power supply 1 drops and the motor 2 is operating under power, the low-voltage speed controller 40 reduces the speed command value to suppress the drop of the DC voltage Vdc. Also, when the voltage of the AC power supply 1 drops and the motor 2 is performing a regenerative operation, the low-voltage speed controller 40 increases the speed command value to suppress the rise of the DC voltage Vdc.

Thus, the low-voltage speed controller 40 operates to suppress fluctuation of the DC voltage Vdc even when an instantaneous drop of the AC voltage output by the AC power supply 1 or an instantaneous power interruption occurs and would cause the DC voltage Vdc input to the inverter device 50 to drop. It is therefore possible to continue the elevator operation without interrupting the operation, even in an environment in which instantaneous decreases of the AC power supply 1 or instantaneous power interruptions frequently occur. An instantaneous drop of the AC voltage or an instantaneous power interruption means a brief drop of the AC voltage or power interruption. Specifically, an instantaneous drop of the AC voltage is when, for example, the period that the effective value of the AC voltage falls below the rated value is about one to ten cycles of the AC voltage cycle. Also, an instantaneous power interruption of the AC voltage is when, for example, the period that the AC voltage is 0 V is about one to ten cycles of the AC voltage cycle. The definitions of the instantaneous drop of the AC voltage and the instantaneous power interruption are determined according to the power supply conditions of the site, plant, etc., where the elevator to which the motor control system is applied is installed.

In a mining site at a mine or the like where mineral resources are mined, etc., the power supply conditions are often poor, and it is difficult to avoid instantaneous decreases of the AC power supply and instantaneous power interruptions. For such conditions as well, by including the low-voltage speed controller 40, the motor drive system 100 according to the embodiment can operate continuously and realize high productivity.

(Second embodiment)

FIG. 4 is a schematic block diagram illustrating a motor drive system according to a second embodiment.

As shown in FIG. 4, the motor drive system 200 according to the embodiment differs from the inverter device 50 according to the first embodiment in that an inverter device 250 that includes a regenerative power controller (a regenerative power control part) 61 is included. The motor drive system 200 according to the embodiment includes a rectifying device 210 instead of the self-commutated converter device 10. Otherwise, the motor drive system 200 according to the embodiment is similar to that of the first embodiment; the same components are marked with the same reference numerals; and a detailed description is omitted as appropriate.

The rectifying device 210 of the motor drive system 200 according to the embodiment includes a rectifying circuit 211. The rectifying circuit 211 is, for example, a three-phase diode bridge circuit, rectifies a three-phase AC voltage, and outputs a pulsating voltage. The pulsating voltage is smoothed by the capacitor 20 and output to the inverter device 250 as the DC voltage Vdc.

Similarly to the inverter device 50 of the first embodiment, in the inverter device 250, the low-voltage speed controller 40 monitors the DC voltage Vdc across the capacitor 20 and corrects the speed command value to suppress fluctuation of the DC voltage Vdc.

When the conversion device that converts the AC voltage of the AC power supply 1 into the DC voltage is the rectifying device 210, the rectifying device 210 does not include a conversion function from the DC voltage to an AC voltage. Therefore, in the inverter device 250 according to the embodiment, when the motor 2 is performing a regenerative operation, the regenerative power controller 61 is operated to suppress the voltage rise across the capacitor 20 by causing the power generated by the regenerative operation of the motor 2 to be consumed by a resistor 62.

For example, the regenerative power controller 61 monitors the current output by the power conversion part 51, and when the motor 2 is performing the regenerative operation, causes the resistor 62 to consume the regenerative power.

The other operations, including the operation of the low-voltage speed controller 40, are similar to those of the inverter device 50 according to the first embodiment.

Effects of the motor drive system 200 according to the embodiment will now be described.

The motor drive system 200 according to the embodiment includes the inverter device 250 that includes the low-voltage speed controller 40; therefore, effects similar to those of the inverter device 50 according to the first embodiment are obtained. Also, according to the embodiment, the conversion device of the AC voltage (the first AC voltage) to the DC voltage is the rectifying device 210. Therefore, the inverter device 250 includes the regenerative power controller 61 for when the motor 2 is performing a regenerative operation. When an instantaneous decrease of the AC voltage of the AC power supply 1 or an instantaneous power interruption occurs, the speed command value is corrected by an operation of the low-voltage speed controller 40 to suppress the generation of the regenerative power. Therefore, an increase of the power consumption in the resistor 62 can be suppressed, and so it is unnecessary to use a resistor 62 that would be larger than necessary.

Although the low-voltage speed controller is mounted in the inverter device in the specific examples described above with reference to the embodiments, the configuration is not limited thereto; the low-voltage speed controller may, of course, be mounted in another control device such as the main control device, etc.

Thus, a motor drive system and a method for controlling a motor that can extend the time that the inverter driving of the motor can continue even when an instantaneous power supply voltage drop occurs is realized.

While certain embodiments of the inventions have been described, these embodiments have been presented by way of example only, and are not intended to limit the scope of the inventions. These novel embodiments may be embodied in a variety of other forms; and various omissions, substitutions, and changes may be made without departing from the spirit of the inventions. Such embodiments and their modifications are within the scope and spirit of the inventions, and are within the scope of the inventions described in the claims and their equivalents.

[Reference Numeral List]

1 AC power supply
2 motor
3 drum
10 converter device
11, 51 power conversion part
14, 57 PWM controller
15 voltage controller
16 AC voltage detecting part
20 capacitor
30 DC voltage detecting part
40 low-voltage speed controller
41, 52 arithmetic unit
42 controller
50 inverter device
53 speed controller
55 current controller
58 emergency stop part
61 regenerative controller
62 resistor
100, 200 motor drive system
101 loop transfer function
102 first transfer function
103 second transfer function
104 third transfer function

## Claims

1. A motor drive system, comprising:

    a first power conversion device converting a first alternating current voltage supplied from an alternating current power supply into a direct current voltage, the first power conversion device outputting the direct current voltage; and
    a second power conversion device converting the direct current voltage into a second alternating current voltage and outputting the second alternating current voltage to a motor,
    the first power conversion device including a direct current voltage control part controlling the direct current voltage to follow a direct current voltage command value, the direct current voltage command value being preset,
    the second power conversion device including

        a first speed control part controlling a speed of the motor to follow a speed command value, the speed command value being preset, and
        a second speed control part calculating a correction value of the speed command value based on the direct current voltage command value and the direct current voltage,

    the second speed control part calculating the correction value based on a difference between the direct current voltage command value and the direct current voltage.

2. The motor drive system according to claim 1, wherein
the first power conversion device includes a power conversion circuit configured to convert the direct current voltage into a third alternating current voltage and output the third alternating current voltage to the alternating current power supply, the power conversion circuit being bidirectional.

3. The motor drive system according to claim 1, wherein
the second power conversion device includes a regenerative power control part consuming regenerative power generated by the motor when the motor is performing a regenerative operation.

4. A method for controlling a motor,

the method using a motor drive system including

a first power conversion device converting a first alternating current voltage supplied from an alternating current power supply into a direct current voltage, the first power conversion device outputting the direct current voltage, and
a second power conversion device converting the direct current voltage into a second alternating current voltage and outputting the second alternating current voltage to a motor,

the method comprising:

causing the first power conversion device to control the direct current voltage to follow a direct current voltage command value, the direct current voltage command value being preset;
causing the second power conversion device to control a speed of the motor to follow a speed command value, the speed command value being preset; and
causing a speed control part to calculate a correction value of the speed command value based on the direct current voltage command value and the direct current voltage,

the speed control part being a control part of a first-order lag system having a dead-time element.

FIG. 1

101

102                           103                           104

$$\left(k_p + k_i \frac{1}{s}\right) \frac{v_{top}}{V_0}$$ dvc $$\frac{1}{1 + Ts} \; e^{-Ls}$$ dv $$- \frac{v}{CV} M_{eq}$$ dV

## FIG. 2

$P_{motor}$ (kW)
$N_{motor}$ (min$^{-1}$)

SHa

$J_{sheave}$ (kgm$^2$)
$D_{sheave}$ (m)

SHb

$L_2$(m)

HB

2

ROb

4

COW
$m_c$ (kg)

3 $L_{1a}$(m)

$L_{1b}$(m)

ROa

CON

# FIG. 3

FIG. 4

## INTERNATIONAL SEARCH REPORT

| | International application No. |
|---|---|
| | **PCT/JP2023/000370** |

### A. CLASSIFICATION OF SUBJECT MATTER

*H02P 21/22*(2016.01)i; *H02P 27/06*(2006.01)i
FI: H02P21/22; H02P27/06

According to International Patent Classification (IPC) or to both national classification and IPC

### B. FIELDS SEARCHED

Minimum documentation searched (classification system followed by classification symbols)

H02P21/22; H02P27/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2003-189689 A (HITACHI, LTD.) 04 July 2003 (2003-07-04) paragraphs [0001]-[0081], fig. 1-17 | 1-4 |
| A | WO 2014/033849 A1 (TOSHIBA MITSUBISHI-ELECTRIC INDUSTRIAL SYSTEMS CORPORATION) 06 March 2014 (2014-03-06) paragraphs [0001]-[0052], fig. 1-13 | 1-4 |
| A | JP 11-299290 A (HITACHI, LTD.) 29 October 1999 (1999-10-29) paragraphs [0001]-[0068], fig. 1-7 | 1-4 |
| A | JP 11-89283 A (HITACHI, LTD.) 30 March 1999 (1999-03-30) paragraphs [0001]-[0066], fig. 1-6 | 1-4 |

☐ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 February 2023** | **07 March 2023** |

| Name and mailing address of the ISA/JP | Authorized officer |
|---|---|
| **Japan Patent Office (ISA/JP) 3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2023/000370**

| Patent document cited in search report | | | Publication date (day/month/year) | Patent family member(s) | Publication date (day/month/year) |
|---|---|---|---|---|---|
| JP | 2003-189689 | A | 04 July 2003 | (Family: none) | |
| WO | 2014/033849 | A1 | 06 March 2014 | US 2015/0236622 A1 paragraphs [0001]-[0063], fig. 1-13 EP 2892149 A1 | |
| JP | 11-299290 | A | 29 October 1999 | (Family: none) | |
| JP | 11-89283 | A | 30 March 1999 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111769773